# EUROPEAN PATENT SPECIFICATION

(11) **EP 3 948 149 B1**
(45) Date of publication and mention of the grant of the patent: **06.11.2024**
(21) Application number: 20743752.6
(22) Date of filing: 02.04.2020
(51) Int. Cl.: F41G 7/00, G09B 9/06, F41J 9/04, F42B 21/00, F42B 19/36, F42B 15/22, F41G 9/02, F41G 7/34, G09B 9/00, G09B 9/56

(54) **DEEP MISSILE BOMB COMPLEXES' TRAINING EQUIPMENT AND MODE OF METHOD TO COMBAT UNDERWATER TARGETS**
VORRICHTUNG ZUM TIEFSEETRAINIEREN VON RAKETEN-BOMBEN-KOMPLEXEN UND VERFAHREN ZUM BEKÄMPFEN VON UNTERWASSERZIELEN
ÉQUIPEMENT D'ENTRAÎNEMENT DE COMPLEXES BOMBE-MISSILE PROFONDS ET MODE DE PROCÉDÉ POUR COMBATTRE DES CIBLES SOUS-MARINES

(30) Priority: 05.04.2019 LT 2019508
(43) Date of publication of application: 09.02.2022
(73) Proprietor: Kaunas University of Technology, 44249 Kaunas (LT)
(72) Inventor: FEDARAVICIUS, Algimantas, Kaunas (LT); SURVILA, Arvydas, Kaunas (LT)
(74) Representative: Pakeniene, Ausra
(86) International application number: PCT/IB2020/053140
(87) International publication number: WO 2020/202058

(56) References cited:
- DE-A1- 2 240 690
- GB-A- 2 130 149
- US-A- 3 180 295
- US-A- 4 991 143
- US-B1- 6 496 447

## Description

### FIELD OF THE INVENTION

The invention belongs to the field of training equipment for training with rocket depth bombs' launching systems.

### BACKGROUND OF THE INVENTION

One of the means to combat underwater targets (e.g. submarines) is rocket depth bomb launching systems, e.g. RBU-6000 (Russia), ASW-601 (Sweden), Roketsan ASW (Turkey), etc. They have similar design and principle of operation and differ only in technical/operational characteristics. The listed depth rocket bomb launching systems comprises a container missile launch system with 6-12 launch devices (tubes), including combat rocket bombs with depth charges, and a sonar for detection of underwater targets. Such system is installed on a combat ship. The ship's sonar detects an underwater target, determines its coordinates and fires rocket bombs. Speed and accuracy of target detection, its coordinate determination and the launch of rocket depth bombs, and at the same time efficiency of firing are highly dependent on training of personnel servicing the system. Therefore, soldiers servicing a rocket depth bomb launching system must be well trained.

Underwater target destruction training uses real combat rocket depth bombs, which are very expensive, their use is quite dangerous, and explosions have a significant negative impact on the ecosystems in the training area.

US patent No. US3180295A discloses an underwater target that releases paint, buoys, or other physical means to the surface of a water if the means in the target detects that the deep charge (its training version) is close enough to the target, e.g., hits it.

DE patent application No. DE2240690A1 discloses a floating/submersible submarine target simulator - for anti-submarine warfare training. Floating and submersible target is in the form of a cylindrical ship's body with a resistant hull, approx. of the dimensions of a typical submarine, the interior of which is filled with closed-pore foamed plastic, pref. in the form of segments, apart from the compartments required for the drive assembly, and measuring, signaling and control equipment.

Patent document RU2628931 C1 (published on 22-08-2017) describes a multifunctional target in water that is similar to a real ship, its structure and assembly. Such target consists of metal masts and plastic parts, has equipment for movement, stopping and mooring.

Patent document DE2240690A1 (published on 1974-02- 28) also describes a method of manufacturing a ship-like target from steel, plastic and concrete. Such target has measuring, signaling and motion control equipment. In this way, rocket depth bomb launching systems can shoot at a target similar to the real one. However, production of such target is complicated and quite expensive process, and real rocket bombs must be used. It is expensive, dangerous and harmful to the environment.

Patent document RU1841104C (published on 2015-07-27) describes a virtual computer simulator for training personnel working with marine radar systems. This simulator has a target detection function, a signal reception simulator, a simulator of signal propagation in various environments, a video signal simulator, and a program that calculates movement of a ship or other target, including input and output signals. This creates an environment that mimics real environment of personnel working with marine radar systems. The problem is that such simulator is very different from shooting in natural conditions: training takes place in computer classrooms where completely different environment influences the operator (air temperature, wind, etc.), also unnatural target detection conditions, psychological tension, etc.

Patent document US5228854A (published on 20-07-1993) describes a training system in which navigation, data processing and transmission systems are mounted on a firing device and on an aircraft, ship or other target. When a simulated shot is fired, a program calculates theoretical movement of the target and the shot and decides whether the target was hit. Still, real shooting doesn't happen.

Patent document RU951 08757A (published on 20-04-1997) describes a method of firing rocket bomb launching systems on a warship designed to combat maneuverable submarines. This method determines the coordinates of the target, its direction of movement and speed in relation to the ship, predicted location of the target after a certain time, direction and speed of the wind, and other parameters required for the shot. At least one ballistic missile, similar in size and weight to the missile system, is launched from the rocket bomb launching systems instead of the guided torpedoes. Before the launch, the ballistic missile is coded, and effectiveness of a particular missile can be traced later. In this way, functions of rocket bomb launching systems for combating maneuverable submarines are extended; the cost of system development is reduced; it is possible to train personnel of rocket bomb launching systems, which increases the efficiency of hitting. The problem is that this method, although cheaper, is more military than training: real ballistic missiles are used, so the method is expensive, dangerous, and damaging to the environment.

Therefore, there is a need for training equipment for training with rocket depth bomb launching systems designed to combat underwater targets, which simulates real shooting conditions to the maximum and is safe, inexpensive, efficient, and environmentally friendly. Technical solution presented in this description maximally simulates real shooting conditions and is safe, inexpensive and efficient, while environmental damage is minimal. It allows training of personnel servicing a rocket depth bomb launching system, the ship's crew and the sonar team.

### SUMMARY OF THE INVENTION

In fight against submarines, rocket depth bomb launching systems are used, firing efficiency of which is highly dependent on training of personnel servicing the launching system. This description provides training equipment that uses shooting training in line with natural shooting operations: combat ships with real rocket depth bomb launching systems, e.g., RBU-6000, ASW-601, Roketsan ASW, etc., and rocket depth training bombs are fired at a target that is immersed in water prior to the shooting training. The training equipment is defined in claim 1.

Benefit of this training equipment is that the shooting training is fully comparable with natural shooting operations. It is a cheap and safe way to shoot with minimal impact on the environment. It allows training of the personnel servicing the rocket depth bomb launching system, the ship's crew, and the sonar team.

### SHORT DESCRIPTION OF DRAWINGS

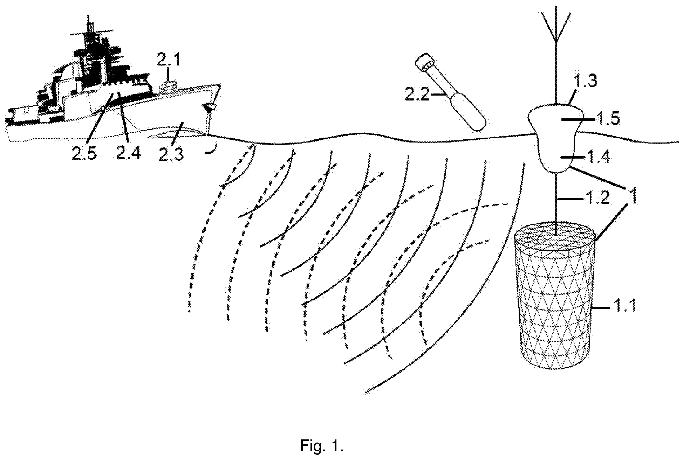

Fig. 1. Shows a composite diagram of rocket depth bomb launching training equipment for rocket depth bomb launching system, wherein the shown elements are: target (1); spatial construction (1.1); rope (1.2); buoy (1.3); winch (1.4); control unit (1.5); rocket bomb complex (2.1); rocket depth training bomb (2.2); sonar (2.3), modem (2.4); controller (2.5).

The figure is illustrative. Scale, proportions, and other aspects do not necessarily correspond to the real technical solution.

### DETAILED DESCRIPTION OF THE INVENTION

Rocket depth bomb launching systems, e.g., RBU-6000 (Russia), ASW-601 (Sweden), Roketsan ASW (Turkey), etc., are means to combat submarines. Shooting efficiency and hitting a target is highly dependent on training of personnel servicing a launching system. Underwater target destruction training often uses real combat rocket depth bombs, which are very expensive, dangerous, and harmful to environment. Thus, there is a need for training equipment for rocket depth bomb launching systems. This invention maximally simulates real shooting conditions and is safe, inexpensive, efficient and has minimal impact on the environment.

This description reveals training equipment for rocket depth bomb launching systems that can be used to detect, aim at and shoot at a target. The training equipment consists of two parts: one part is the target (1), and the second part of the training equipment is installed on the shooting unit. Below is described the structure of the training equipment as shown in Fig. 1.

The target (1) comprises the following components:
- a spatial structure (1.1);
- a rope (1.2);
- a buoy (1.3);
- a winch (1.4);
- a control unit (1.5).

Other parts may also be placed on the target (1) to supplement the operation of the target (1). In individual cases outside the claimed subject-matter, parts may not be present. For example, the target (1) may consist of the spatial structure (1.1), the buoy (1.3), the rope (1.2) and the control unit (1.5).

Largest part of the target (1) is the spatial structure (1.1) imitating a submarine. The spatial structure (1.1) can be made of various natural or synthetic materials: metal, plastic, fiberglass, wood, or others. The spatial structure (1.1) must reflect sound waves. The spatial structure (1.1) can be of various shapes and structures; it can be hollow, partially or completely filled. The spatial structure (1.1) and the filler may be of different materials. For example, the structure can be made of metal and the filler can be made of plastic. The spatial structure (1.1) can be stationary or movable. An underwater structure (1.1) is most commonly used, but it can also be on the surface of the water. When the spatial structure (1.1) is underwater, the immersion depth can be adjusted by means of the winch (1.4) fitted to the buoy (1.3).

The buoy (1.3) is a non-sinking object, which is lighter than water. The buoy (1.3) is usually on the surface of the water but may be partially or completely submerged. The buoy (1.3) is required to support the spatial structure (1.1) in the water. Therefore, the buoy (1.3) must be selected according to the spatial structure (1.1): the complex of the buoy (1.3) and the spatial structure (1.1) connected by a rope (1.2) must not sink. One or more buoys (1.3) may be used, which may be interconnected or not interconnected in any way. If several buoys (1.3) are used, they may be of different sizes, made of different materials and at different levels of immersion.

The rope (1.2) is an object connecting the spatial structure (1.1) and the buoy (1.3). The rope (1.2) is usually a flexible object and can be wound on the winch (1.4). The rope (1.2) can be made of different materials: it can be a metal rope or a chain; fabric, a cord of natural or other fiber; synthetic wire or object made of other natural or synthetic materials. The rope (1.2) can also be a rigid, inflexible object - in this case the depth of the spatial structure (1.1) is not adjustable, or it can be adjusted by changing the length of the rope (1.2).

The winch (1.4) is a lifting mechanism which, as usual, consists of a rotating drum with the rope (1.2). With the help of a winch (1.4), immersion depth of the spatial structure (1.1) can be adjusted by changing length of the rope (1.2). The winch (1.4) may be manually operated or have a motor that changes length of the rope (1.2) by winding or unwinding it. The winch (1.4) usually has a device that locks the rope (1.2) in a desired position. The winch (1.4) may or may not have a device for securing the rope (1.2). In this case depth of the spatial structure (1.1) is not adjustable, or it can be adjusted by changing the length of the rope (1.2).

The control unit (1.5) is a device that can receive, process, and transmit data. The control unit (1.5) has the following basic components:
- a controller;
- a modem;
- a satellite navigation system;
- a bomb drop detector.

The control unit (1.5) may have other components necessary for its operation.

The modem is a device that sends or receives data between the target (1) and the shooting unit. The target (1) must have a radio-controlled modem, but there may be a modem controlled by a different principle.

The controller is an electronic device consisting of a microprocessor, a short-term and a long-term memory modules, a power supply or any other parts common to controllers. The controller may be a microcomputer, a mini-computer, a computer or another device consisting of the aforementioned parts and capable of performing the functions assigned to it. The controller must be able to receive signals from the satellite navigation system, the modem and the rocket depth training bomb drop detector; and must be able to transmit signals to the modem of the target. The controller may also perform other functions necessary to ensure the operation of the target or perform only a portion of the functions mentioned herein.

The satellite navigation system is a system that allows determining coordinates of an object, its speed and direction. This can be a Global Positioning System (GPS), Beidou, Galileo, GLONASS, IRNSS, QZSS or any other system.

The rocket depth training bomb drop detector is a device that detects presence of the rocket depth training bomb (2.2) in or adjacent to the spatial structure (1.1) of the target (1) or detects activation of the rocket depth training bomb (2.2). The rocket depth training bomb drop detector can have a device that emits and receives various waves. In this case, the rocket depth training bomb (2.2) is detected by the waves reflected from the rocket depth training bomb (2.2). The area of the space in which the waves propagate may be the area occupied by the spatial structure of the target (1.1), or a certain area around the spatial structure of the target (1.1). In the individual case, the space around the spatial structure of the target (1.1) may be changed when necessary for the purposes of shooting training. The rocket depth training bomb drop detector may have a device that detects a signal triggered during bomb activation. As an example, the rocket depth training bomb drop detector can detect chemicals, sound, changes in temperature or pressure, and other signals released during bomb activation. Such signals can also be detected if the rocket depth training bomb is near the spatial structure (1.1) of the target, although it is not activated. The rocket depth training bomb drop detector is mounted on the buoy (1.3), but in individual cases it may also be mounted on the spatial structure (1.1). When the rocket depth training bomb (2.2) is detected, the rocket depth training bomb drop detector transmits the data to the controller.

The shooting unit part of the training equipment is usually installed on a combat ship. In individual cases the shooting unit part of the training equipment may be installed in other ships: passenger, cargo or other ships. The shooting unit part of the training equipment consists of the following components (Fig. 1):
- a rocket depth bomb launching system (2.1);
- a rocket depth training bomb (2.2);
- a sonar (2.3);
- a modem (2.4);
- a controller (2.5).

The rocket depth bomb launching system (2.1) comprises software and hardware for the detection, tracking and firing of rocket depth training bombs at submarines or other targets. As an example, the rocket depth bomb launching system may be RBU-6000 (Russia), ASW-601 (Sweden), Roketsan ASW (Turkey), etc. Their structure and principle of operation are similar, and differ only in technical/operational parameters, i.e., firing distance, geometric dimensions, mass of a rocket bomb, mass of a warhead, depth of explosion, etc. The rocket depth bomb launching system (2.1) consists of a container rocket launcher with an appropriate number of launchers (tubes). There are usually 6-12 launchers, but there may be a different number of launchers. A rocket depth bomb launching system (2.1) can launch training, combat, or other bombs at a target.

The rocket depth training bomb (2.2) is such a bomb that is used during training and can be launched by the rocket depth bomb launching system (2.1). The training bomb (2.2) can be activated during contact with the spatial structure (1.1) of the target. The signal triggered during activation of the bomb (2.2) is detected by the bomb drop detector. The training bomb (2.2) may or may not have an activation feature. In the latter case, the bomb drop detector detects the hit on the target by the presence of the training bomb (2.2) in or near the spatial structure (1.1) of the target. In this description, the term "activated" is used without limitation of the way in which the bomb (2.2) is detected by a fall detector: whether the bomb (2.2) is activated during contact, or whether the bomb enters a defined area, or otherwise.

The sonar (2.3) is a device used to detect underwater objects. The sonar (2.3) has equipment capable of sending and receiving sound waves and analyzing the data obtained. The sonar (2.3) sends sound waves of a certain frequency and receives sound waves (echoes) reflected from the environment or target. Knowing the speed of sound waves in the water, the sonar (2.3) program detects the spatial structure (1.1) of the target and calculates the distance to it. The most commonly used is active sonar (2.3), i.e., such sonar that sends and receives reflected sound waves. When the target (1) emits sound waves itself, the sonar (2.3) can be passive. In this case, the sonar (2.3) only receives sound waves, thus detecting the target (1) or another object.

The modem (2.4) is a device that sends or receives data between the shooting unit and the target (1). The ship must have a radio-controlled modem, but there may be modem controlled by a different principle.

The controller (2.5) is an electronic device consisting of a microprocessor, short-term and long-term memory modules, a power supply or other parts common to controllers. The controller may be a microcomputer, a mini-computer, a computer or another device consisting of the aforementioned parts and capable of performing the functions assigned to it. The controller (2.5) of the shooting unit must be able to receive signals from the modem (2.4) of the shooting unit and must be able to inform the staff of the shooting unit about the hit of the target (1). The controller (2.5) may also perform other functions necessary for the operation of the shooting unit.

Method of operation of the described training equipment is based on interaction between the shooting unit and the target (1). The target (1) is immersed in water before shooting training. During the training personnel of a military or other ship use the sonar (2.3) to detect the spatial structure (1.1) of the target. The sonar (2.3) emits and receives reflected sound waves. Sound waves are emitted in different directions. From the time interval between the transmitted and received reflected sound wave and the direction of transmission of the waves, the sonar (2.3) determines where the spatial structure (1.1) of the target is located. By emitting sound waves to the area of space adjacent to the detected spatial structure (1.1) the parameters of the spatial structure (1.1) and the direction of movement can be determined. In this way, the sonar (2.3) determines coordinates of the target (1), also spatial and motion parameters of the target (1). This is done in the same way as is common in using sonars on ships. When the target (1) is detected, the training bomb (2.2) or a series of bombs are launched from the rocket bomb complex (2.1) towards the target (1). If the target (1) is set correctly, the training bomb (2.2) falls near the target (1) and is activated by contact with the spatial structure (1.1) of the target. Activation of the training bomb (2.2) is recorded by the bomb drop detector in the control unit (1.5), which transmits the bomb activation data to the controller of the target (1). The bomb drop detector can detect the bomb (2.2) not by its activation but by the presence of the bomb (2.2) near the spatial structure (1.1) of the target; the training bomb (2.2) is detected even if it is not activated. The controller of the target (1) captures coordinates of the target (1) obtained from the satellite navigation system at this particular moment. Data on the activation of the rocket depth training bomb (2.2), activation time and coordinates are transmitted by the controller of the target (1) to the modem of the target (1), which transmits this data to the modem (2.4) of the shooting unit. The modem (2.4) of the shooting unit transmits this data to the controller (2.5) of the shooting unit, which informs the personnel of the rocket depth bomb launching system about the hit.

The described method of operation of the field training equipment for the rocket depth bomb launching system can be divided into the following stages:
- the target (1) is immersed in water before the shooting training;
- the coordinates of the target (1), its spatial and movement parameters are determined by means of the on-board sonar (2.3);
- the personnel launch the rocket depth training bomb (2.2) from the rocket depth bomb launching system (2.1) towards the target (1);
- if the rocket depth training bomb (2.2) hits the spatial structure (1.1) of the target (1), the rocket depth bomb (2.2) is activated during contact with the spatial structure (1.1);
- the bomb drop detector detects activation of the rocket depth training bomb (2.2) and transmits information to the controller of the target (1) that the target (1) was hit;
- the controller of the target (1) records coordinates of the target (1) obtained from the satellite navigation system;
- the controller of the target (1) transmits the activation time and coordinates of the rocket depth training bomb (2.2) to the modem of the target (1);
- the modem of the target (1) transmits this data to the modem (2.4) of the shooting unit;
- the modem (2.4) of the shooting unit transmits this data to the controller (2.5) of the shooting unit;
- the controller (2.5) of the shooting unit informs the personnel about the hit of the target (1), time of the hit and coordinates of the target (1).

Training equipment described in this invention can be used in a variety of training situations. As a specific example, which is not limiting, such training equipment can be used to train personnel of rocket depth bomb launching systems, personnel of sonars, also ship control personnel during military exercises. In this case, the training equipment consists of the target (1) and a combat ship equipped with the shooting unit. The target (1) has the spatial structure (1.1) that is made of metal or other material and reflects sound waves emitted by the ship's sonar (2.3). As an example, the spatial structure (1.1) of the target can be cylindrical in shape, 10 m in diameter and 10 m high, and can be submerged to a depth of 20 m. The spatial structure (1.1) of the target (1) is connected by the rope (1.2) to the buoy (1.3) located above the spatial structure (1.1). The buoy (1.3) is equipped with a winch (1.4), which allows changing the extent of winding or unwinding of the rope (1.2), thus adjusting depth of the spatial structure (1.1). The buoy (1.3) remains on the water surface, the whole buoy/spatial structure does not sink. The buoy (1.3) has a control unit that includes a GPS navigation system, a radio modem, a controller, and a bomb drop detector. The combat ship has a rocket depth bomb launching system, e.g., RBU-6000, ASW-601, Roketsan ASW or other, a sonar (2.3), and is equipped with rocket depth training bombs. The combat ship is also equipped with a modem and a controller. During military exercises, the sonar (2.3) is used to detect the target (1). When the target (1) is detected and its coordinates, size, shape, direction, and speed of movement are recorded, the rocket depth training bomb (2.2) is launched from the rocket bomb launching system towards the target (1). When the rocket depth training bomb (2.2) falls close enough to the target (1), it is activated during contact with the target (1). The rocket depth training bomb activation is detected by the bomb drop detector. The hit data is transmitted by the bomb drop detector to the controller of the target (1), which at that moment records coordinates of the target (1) obtained from the GPS. The hit data, hit time and coordinates are transmitted by the controller of the target (1) to the modem of the target (1), and the modem of the target transmits this data to the modem (2.4) of the shooting unit. The modem (2.4) of the shooting unit transmits this data to the controller of the shooting unit, which informs the personnel of the rocket bomb launching system about the hit. In this way, the personnel work in conditions close to a combat, taking in account the surroundings and also psychological point of view.

Another specific example may include, but is not limited to, the use of such training equipment for detecting, tracking, and shooting at the targets floating on water. In this case, the entire spatial structure (1.1) floats on the surface of the water, or part of the structure (1.1) is under water and the rest of the structure (1.1) is on the water. All other components of the rocket depth bomb launching training equipment are the same as described above. Method of operation of the rocket depth bomb launching training equipment is identical to the method of operation described above when the spatial structure (1.1) of the target (1) is underwater.

To illustrate and describe the present invention the most preferred embodiments are described above. It is not an exhaustive or restrictive description, intended to determine the exact form or embodiment. The above description should be considered as an illustration rather than as a limitation. Obviously, many modifications and variations can be apparent to those skilled in the art. An embodiment is selected and described so that those skilled in the art can best understand the principles of the present invention and the best practice for different embodiments with different modifications to suit a particular use or implementation. It is intended that the scope of this invention is defined by the appended claims. in which all the above terms have the broadest meaning, unless otherwise indicated. Modifications may be made to the embodiments described by those skilled in the art without departing from the scope of the present invention, as defined below.

## Claims

1. Training equipment for training with rocket depth bombs' launching systems designed to fight against underwater targets, where the training equipment comprises a target (1) and a shooting unit, and wherein
the target (1) comprises a spatial structure (1.1) imitating a submarine and reflecting sound waves, at least one non-sinking in water buoy (1.3) configured for supporting
the spatial structure (1.1) in the water, a rope (1.2) connecting the spatial structure (1.1) and the buoy (1.3), a winch (1.4) fitted to the buoy (1.3) for adjusting submersion depth of the spatial structure (1.1) by changing length of the rope where the buoy (1.3) comprises a control unit (1.5) comprising a satellite navigation system, a modem, a controller, and a bomb drop detector, where the control unit (1.5) transfers data about a hit, its location and time of hit to a modem (2.4) of the shooting unit,
where
the modem of the target is a device that sends or receives data between the target (1) and the shooting unit,
the controller is a device configured for receiving signals from the satellite navigation system modem of the target and the bomb drop detector and configured for transmitting signals to the modem of the target (1),
the bomb drop detector is a device configured for detecting presence of a rocket depth training bomb (2.2) in or adjacent to spatial structure of the target (1), or the activation of the rocket depth training bomb (2.2),
the satellite navigation system determines coordinates of the target (1),
and in that the shooting unit comprises a rocket bomb launching system (2.1) configured for tracking and firing of rocket depth training bombs (2.2) at a target, at least one rocket depth training bomb (2.2), a sonar (2.3) configured for detecting the spatial structure (1.1), the modem (2.4) of the shooting unit configured for sending or receiving data between the shooting unit and the target (1), and a controller (2.5) configured for receiving signals from the modem (2.4) of the shooting unit and configured for informing the staff of the shooting unit about the hit of the target (1).

2. Method of operation of training equipment for hitting a target in water by a depth rocket training bomb launched from a shooting unit, wherein it comprises the following operating stages:
- Immersing the target (1) in water before the military shooting exercise; where
- the target (1) comprises a spatial structure (1.1) imitating a submarine and reflecting sound waves, at least one non-sinking in water buoy (1.3) configured for supporting the spatial structure (1.1) in the water, a rope (1.2) connecting the spatial structure (1.1) anc the buoy (1.3), a winch (1.4) fitted to the buoy (1.3) configured for adjusting submersion depth of the spatial structure (1.1) by changing length of the rope,
- where the buoy (1.3) comprises a control unit (15) comprising a satellite navigation system, a modem, a controller, and a bomb drop detector, where the control unit (15) transfers data about a hit, its location and time of hit to a modem (2.4) of the shooting unit,
- where
- the modem of the target is a device that sends or receives data between the target (1) and the shooting unit,
- the controller is a device configured for receiving signals from the satellite navigation system the modem of the target and the bomb drop detector and configured for transmitting signals to the modem of the target (1),
- the bomb drop detector is a device configured for detecting presence of a rocket depth training bomb (2.2) in or adjacent to spatial structure of the target (1), or the activation of the rocket depth training bomb (2.2),
- the satellite navigation system determines coordinates of the target (1),
- determining coordinates of the target (1), its spatial and movement parameters by means of an on-board sonar (2.3) of the shooting unit;
- launching the rocket depth training bomb (2.2) from a rocket depth bomb launch system (2.1) on-board the shooting unit, towards the target (1);
- if the rocket depth training bomb (2.2) hits the spatial structure (1.1) of the target (1), the rocket depth training bomb (2.2) is activated during contact with the spatial structure (1.1);
- the bomb drop detector detects the activation of the rocket depth training bomb (2.2) and transmits information to the controller of the target (1) that the target (1) was hit;
- the controller of the target (1) records the coordinates of the target (1) obtained from the satellite navigation system of the control unit (1.5) of the target (1);
- the controller of the target (1) transmits data to the modem of the target (1) about the activation, activation time and coordinates of the rocket depth training bomb (2.2);
- the modem of the control unit (1.5) of the target (1) transmits the data about the activation, activation time and coordinates of the rocket depth training bomb (2.2), to the modem (2.4) of the shooting unit;
- the modem (2.4) of the shooting unit transmits this data to the controller (2.5) of the shooting unit;
- the controller (2.5) of the shooting unit informs personnel of the shooting unit about the hit of the target (1), the time of the hit and the coordinates of the target (1).

3. Method according to claim 2, **characterized in that** the data between the target (1) and the shooting unit is transmitted by radio via the modems.

## Patentansprüche

1. Trainingsausrüstung zum Trainieren mit Startsystemen für Raketentiefenbomben, die dazu ausgestaltet sind, Unterwasserziele zu bekämpfen, wobei die Trainingsausrüstung ein Ziel (1) und eine Schießeinheit umfasst und wobei
das Ziel (1) eine räumliche Struktur (1.1), die ein Unterseeboot imitiert und Schallwellen reflektiert, mindestens eine nicht sinkende Wasserboje (1.3), die zum Stützen der räumlichen Struktur (1.1) im Wasser konfiguriert ist, ein Seil (1.2), das die räumliche Struktur (1.1) und die Boje (1.3) verbindet, eine Winde (1.4), die an der Boje (1.3) angebracht ist, um die Eintauchtiefe der räumlichen Struktur (1.1) durch Ändern der Länge des Seils anzupassen, umfasst,
wobei die Boje (1.3) eine Steuereinheit (1.5) umfasst, die ein Satellitennavigationssystem, ein Modem, eine Steuerung und einen Bombenabwurfdetektor umfasst, wobei die Steuereinheit (1.5) Daten über einen Treffer, dessen Position und Zeit des Treffers an ein Modem (2.4) der Schießeinheit überträgt,
wobei
das Modem des Ziels eine Vorrichtung ist, die Daten zwischen dem Ziel (1) und der Schießeinheit sendet oder empfängt,
die Steuerung eine Vorrichtung ist, die zum Empfangen von Signalen von dem Satellitennavigationssystem, dem Modem des Ziels und dem Bombenabwurfdetektor konfiguriert ist und zum Übertragen von Signalen an das Modem des Ziels (1) konfiguriert ist,
der Bombenabwurfdetektor eine Vorrichtung ist, die zum Detektieren des Vorhandenseins einer Raketentiefentrainingsbombe (2.2) in oder neben der räumlichen Struktur des Ziels (1) oder der Aktivierung der Raketentiefentrainingsbombe (2.2) konfiguriert ist, das Satellitennavigationssystem Koordinaten des Ziels (1) bestimmt,
und die Schießeinheit ein Raketenbombenstartsystem (2.1), das zum Verfolgen und Abfeuern von Raketentiefentrainingsbomben (2.2) auf ein Ziel konfiguriert ist, mindestens eine Raketentiefentrainingsbombe (2.2), ein Sonar (2.3), das zum Detektieren der räumlichen Struktur (1.1) konfiguriert ist, das Modem (2.4) der Schießeinheit, das zum Senden oder Empfangen von Daten zwischen der Schießeinheit und dem Ziel (1) konfiguriert ist, und eine Steuerung (2.5), die zum Empfangen von Signalen von dem Modem (2.4) der Schießeinheit konfiguriert ist und zum Informieren des Personals der Schießeinheit über den Treffer des Ziels (1) konfiguriert ist, umfasst.

2. Betriebsverfahren von Trainingsausrüstung zum Treffen eines Ziels in Wasser durch eine Tiefenraketentrainingsbombe, die von einer Schießeinheit gestartet wird, wobei es die folgenden Betriebsstufen umfasst:
- Eintauchen des Ziels (1) in Wasser vor der militärischen Schießübung;
wobei
- das Ziel (1) eine räumliche Struktur (1.1), die ein Unterseeboot imitiert und Schallwellen reflektiert, mindestens eine nicht sinkende Wasserboje (1.3), die zum Stützen der räumlichen Struktur (1.1) im Wasser konfiguriert ist, ein Seil (1.2), das die räumliche Struktur (1.1) und die Boje (1.3) verbindet, eine Winde (1.4), die an der Boje (1.3) angebracht ist, um die Eintauchtiefe der räumlichen Struktur (1.1) durch Ändern der Länge des Seils anzupassen, umfasst,
- wobei die Boje (1.3) eine Steuereinheit (15) umfasst, die ein Satellitennavigationssystem, ein Modem, eine Steuerung und einen Bombenabwurfdetektor umfasst, wobei die Steuereinheit (15) Daten über einen Treffer, dessen Position und Zeit des Treffers an ein Modem (2.4) der Schießeinheit überträgt,
- wobei
- das Modem des Ziels eine Vorrichtung ist, die Daten zwischen dem Ziel (1) und der Schießeinheit sendet oder empfängt,
- die Steuerung eine Vorrichtung ist, die zum Empfangen von Signalen von dem Satellitennavigationssystem, dem Modem des Ziels und dem Bombenabwurfdetektor konfiguriert ist und zum Übertragen von Signalen an das Modem des Ziels (1) konfiguriert ist,
- der Bombenabwurfdetektor eine Vorrichtung ist, die zum Detektieren des Vorhandenseins einer Raketentiefentrainingsbombe (2.2) in oder neben der räumlichen Struktur des Ziels (1) oder der Aktivierung der Raketentiefentrainingsbombe (2.2) konfiguriert ist,
- das Satellitennavigationssystem Koordinaten des Ziels (1) bestimmt,
- Bestimmen von Koordinaten des Ziels (1), dessen Raum- und Bewegungsparametern mittels eines bordeigenen Sonars (2.3) der Schießeinheit;
- Starten der Raketentiefentrainingsbombe (2.2) von einem Raketentiefenbombenstartsystem (2.1) an Bord der Schießeinheit in Richtung des Ziels (1);
- falls die Raketentiefentrainingsbombe (2.2) die räumliche Struktur (1.1) des Ziels (1) trifft, wird die Raketentiefentrainingsbombe (2.2) während des Kontakts mit der räumlichen Struktur (1.1) aktiviert;
- der Bombenabwurfdetektor detektiert die Aktivierung der Raketentiefentrainingsbombe (2.2) und überträgt Informationen an die Steuerung des Ziels (1), dass das Ziel (1) getroffen wurde;
- die Steuerung des Ziels (1) zeichnet die Koordinaten des Ziels (1) auf, die von dem Satellitennavigationssystem der Steuereinheit (1.5) des Ziels (1) erhalten wurden;
- die Steuerung des Ziels (1) überträgt Daten über die Aktivierung, Aktivierungszeit und Koordinaten der Raketentiefentrainingsbombe (2.2) an das Modem des Ziels (1);
- das Modem der Steuereinheit (1.5) des Ziels (1) überträgt die Daten über die Aktivierung, Aktivierungszeit und Koordinaten der Raketentiefentrainingsbombe (2.2) an das Modem (2.4) der Schießeinheit;
- das Modem (2.4) der Aufnahmeeinheit überträgt diese Daten an die Steuerung (2.5) der Aufnahmeeinheit;
- die Steuerung (2.5) der Schießeinheit informiert das Personal der Schießeinheit über den Treffer des Ziels (1), den Zeitpunkt des Treffers und die Koordinaten des Ziels (1).

3. Verfahren nach Anspruch 2, **dadurch gekennzeichnet, dass** die Daten zwischen dem Ziel (1) und der Schießeinheit per Funk über die Modems übertragen werden.

## Revendications

1. Équipement d'entraînement pour l'entraînement aux systèmes de lancement de bombes-roquettes de profondeur conçues pour combattre des cibles sous-marines, où l'équipement d'entraînement comprend une cible (1) et une unité de tir et dans lequel
la cible (1) comprend une structure spatiale (1.1) imitant un sous-marin et réfléchissant les ondes sonores, au moins une bouée insubmersible dans l'eau (1.3) configurée pour supporter la structure spatiale (1.1) dans l'eau, une corde (1.2) reliant la structure spatiale (1.1) et la bouée (1.3), un treuil (1.4) monté sur la bouée (1.3) pour ajuster la profondeur d'immersion de la structure spatiale (1.1) en changeant la longueur de la corde
où la bouée (1.3) comprend une unité de commande (1.5) comprenant un système de navigation par satellite, un modem, un dispositif de commande et un détecteur de largage de bombe, où l'unité de commande (1.5) transfère des données sur une frappe, son emplacement et l'heure de frappe à un modem (2.4) de l'unité de tir,
où
le modem de la cible est un dispositif qui envoie ou reçoit des données entre la cible (1) et l'unité de tir,
le dispositif de commande est un dispositif configuré pour recevoir des signaux du système de navigation par satellite, du modem de la cible et du détecteur de largage de bombe et configuré pour transmettre des signaux au modem de la cible (1),
le détecteur de largage de bombe est un dispositif configuré pour détecter la présence d'une bombe-roquette d'entraînement de profondeur (2.2) dans ou à proximité de la structure spatiale de la cible (1), ou l'activation de la bombe-roquette d'entraînement de profondeur (2.2),
le système de navigation par satellite détermine les coordonnées de la cible (1),
et en ce que l'unité de tir comprend un système de lancement de bombe-roquette (2.1) configuré pour suivre et tirer des bombes-roquettes d'entraînement de profondeur (2.2) sur une cible, au moins une bombe-roquette d'entraînement de profondeur (2.2), un sonar (2.3) configuré pour détecter la structure spatiale (1.1), le modem (2.4) de l'unité de tir configuré pour envoyer ou recevoir des données entre l'unité de tir et la cible (1), et un dispositif de commande (2.5) configuré pour recevoir des signaux du modem (2.4) de l'unité de tir et configuré pour informer le personnel de l'unité de tir de l'atteinte de la cible (1).

2. Procédé de fonctionnement d'équipement d'entraînement pour l'atteinte d'une cible dans l'eau par une bombe-roquette d'entraînement de profondeur lancée à partir d'une unité de tir, comprenant les étapes de fonctionnement suivantes :
- l'immersion de la cible (1) dans l'eau avant l'exercice de tir militaire ;
où
- la cible (1) comprend une structure spatiale (1.1) imitant un sous-marin et réfléchissant les ondes sonores, au moins une bouée insubmersible dans l'eau (1.3) configurée pour supporter la structure spatiale (1.1) dans l'eau, une corde (1.2) reliant la structure spatiale (1.1) et la bouée (1.3), un treuil (1.4) monté sur la bouée (1.3) configuré pour ajuster la profondeur d'immersion de la structure spatiale (1.1) en changeant la longueur de la corde,
- où la bouée (1.3) comprend une unité de commande (15) comprenant un système de navigation par satellite, un modem, un dispositif de commande et un détecteur de largage de bombe, où l'unité de commande (15) transfère des données sur une frappe, son emplacement et l'heure de frappe à un modem (2.4) de l'unité de tir,
- où
- le modem de la cible est un dispositif qui envoie ou reçoit des données entre la cible (1) et l'unité de tir,
- le dispositif de commande est un dispositif configuré pour recevoir des signaux du système de navigation par satellite, du modem de la cible et du détecteur de largage de bombe et configuré pour transmettre des signaux au modem de la cible (1),
- le détecteur de largage de bombe est un dispositif configuré pour détecter la présence d'une bombe-roquette d'entraînement de profondeur (2.2) dans ou à proximité de la structure spatiale de la cible (1), ou l'activation de la bombe-roquette d'entraînement de profondeur (2.2),
- le système de navigation par satellite détermine les coordonnées de la cible (1),
- la détermination des coordonnées de la cible (1), de ses paramètres spatiaux et de mouvement au moyen d'un sonar (2.3) embarqué de l'unité de tir ;
- le lancement de la bombe-roquette d'entraînement de profondeur (2.2) à partir d'un système de lancement de bombe-roquette de profondeur (2.1) à bord de l'unité de tir, vers la cible (1) ;
- si la bombe-roquette d'entraînement de profondeur (2.2) atteint la structure spatiale (1.1) de la cible (1), la bombe-roquette d'entraînement de profondeur (2.2) est activée lors du contact avec la structure spatiale (1.1) ;
- le détecteur de largage de bombe détecte l'activation de la bombe-roquette d'entraînement de profondeur (2.2) et transmet des informations au dispositif de commande de la cible (1) indiquant que la cible (1) a été atteinte ;
- le dispositif de commande de la cible (1) enregistre les coordonnées de la cible (1) obtenues à partir du système de navigation par satellite de l'unité de commande (1.5) de la cible (1) ;
- le dispositif de commande de la cible (1) transmet des données au modem de la cible (1) sur l'activation, le temps d'activation et les coordonnées de la bombe-roquette d'entraînement de profondeur (2.2) ;
- le modem de l'unité de commande (1.5) de la cible (1) transmet les données sur l'activation, le temps d'activation et les coordonnées de la bombe-roquette d'entraînement de profondeur (2.2), au modem (2.4) de l'unité de tir ;
- le modem (2.4) de l'unité de tir transmet ces données au dispositif de commande (2.5) de l'unité de tir ;
- le dispositif de commande (2.5) de l'unité de tir informe le personnel de l'unité de tir de l'atteinte de la cible (1), de l'heure de l'atteinte et des coordonnées de la cible (1).

3. Procédé selon la revendication 2, **caractérisé en ce que** les données entre la cible (1) et l'unité de tir sont transmises par radio via les modems.
